Europäisches Patentamt

European Patent Office

Office européen des brevets

(11) Publication number: **0 391 702**
**A1**

# EUROPEAN PATENT APPLICATION

(21) Application number: **90303640.8**

(22) Date of filing: **04.04.90**

(51) Int. Cl.⁵: **F03D 1/06**

(30) Priority: **04.04.89 GB 8907544**

(43) Date of publication of application:
**10.10.90 Bulletin 90/41**

(84) Designated Contracting States:
**CH DE DK FR GB LI NL SE**

(71) Applicant: **Kidd, Archibald Watson**
**Seend Close Seend**
**Melksham Wiltshire(GB)**

(72) Inventor: **Kidd, Archibald Watson**
**Seend Close Seend**
**Melksham Wiltshire(GB)**

(74) Representative: **Ford, Michael Frederick et al**
**MEWBURN ELLIS 2 Cursitor Street**
**London EC4A 1BQ(GB)**

(54) **The design of a windmill blade.**

(57) A windmill blade (16) comprises a torsion member (20) extending along the blade, a plurality of ribs (22) fast with the torsion member and extending perpendicularly from the torsion member at points spaced along its length, and an outer skin (28) over the torsion member and ribs.

WELDED

AXIAL LENGTH GREATLY FORESHORTENED

FIG 2.

EP 0 391 702 A1

# THE DESIGN OF A WINDMILL BLADE

This invention relates to windmills, especially those with multiple blades.

In a multi-bladed windmill of the hooped frame type, having possibly thirtysix blades supported between the inner and outer rings, it is a matter of importance that the blades are capable of being easily and cheaply made, that they are of good aerodynamic shape and that they are strong enough to give a long trouble-free life despite the inevitable storms, gales and even the occasional hurricane. In addition, each blade must be capable of accepting the stresses arising from any self-feathering gear. A form of self-feathering gear is dislcosed in my simultaneous European application, entitled "Automatic Feathering Gear for Windmill Blades" the disclosure of which is incorporated herein by reference.

Broadly, this invention provides a blade with structural parts inside an outer skin.

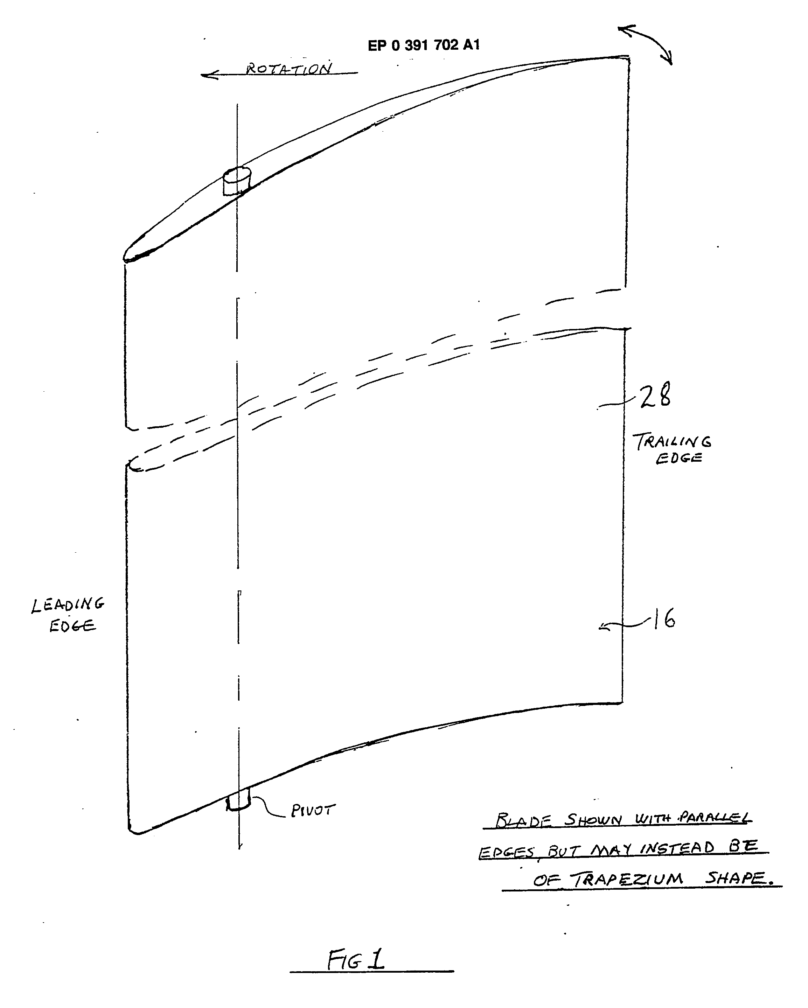

The blade is likely to be of roughly rectangular shape, perhaps eight or more metres long and two or three metres wide, for example. In order to present an aerodynamic cross sectional shape to the wind, it is likely to be of thinnish section on the lines of Fig 1. It will be seen at once that such a shape has very little torsional strength and is likely to be very floppy in this respect. To provide the requisite torsional strength, I propose to employ a torsion member running down the length of the blade. Desirably this is either exactly or approximately in line with the axis of the top and bottom bearings on which the blade will pivot in the course of changing pitch or feathering. This torsion member may be a shaft or a tube of circular section or of square or even specially extruded section to match the shape of the blade at the part affected. However a variety of shapes are possible, or even several tubes may be used providing they result in a torsionally stiff longitudinal backbone, as it were, for the blade itself.

However, since the blade covering is likely to be of thin sheet metal, say aluminium or alloy of similar properties, the torsion member alone will not suffice to give rigidity under stress owing to the ease with which the unsupported sheet metal will flex or bend.

I therefore propose that the torsion member should have at intervals along its length a number of ribs or partial diaphragms firmly secured to it projecting fore and aft and of the appropriate shape being that of the blade cross section. Accordingly therefore this form of the invention provides a windmill blade comprising a torsion member extending along the blade, a plurality of ribs or diaphragms fast with the torsion member and extending from the torsion member at points spaced along its length, and an outer skin over the torsion member and ribs.

The ribs preferably each lie in a respective plane which may be substantially perpendicular to the torsion member in which case the outline of each rib can substantially correspond to the blade cross section.

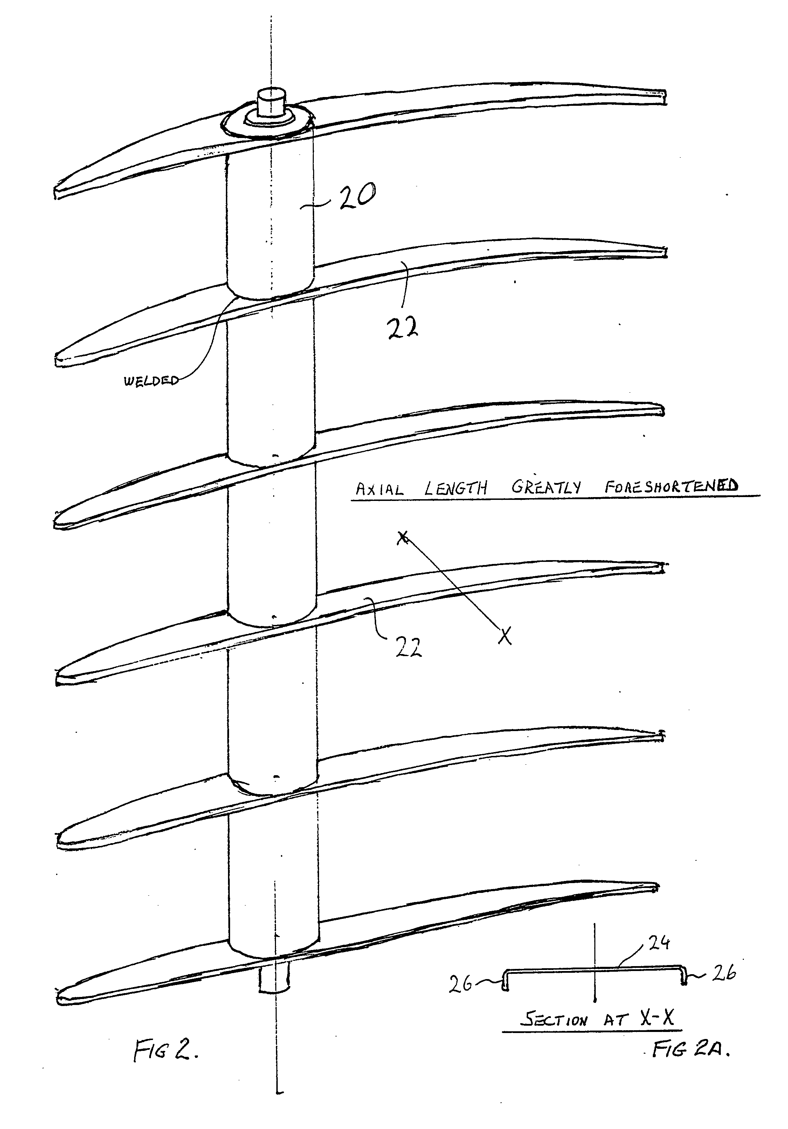

As well as being torsionally stiff the main central shaft or tubular section member forming the main end to end core of the blade must also be laterally stiff when considered as a beam since its length between supporting bearings, as aforesaid may be eight or more metres long. It may therefore be better on long blades to use an extruded hollow section not only conforming on two opposite faces to the blade cross section profile, but also having the faces to which the sheeting will be attached somewhat thicker in section than the remainder of the section. In this way adequate beam strength can be obtained without unduly thickening the cross section of the blade itself. **Fig 2 and Fig 2B**.

It may be convenient to stagger the rib plates to give the blade a different pitch from one end to the other for aerodynamic reasons. Thus the inner end of a blade may have rather a coarser pitch than at the outer end. It may also be convenient to stamp-out these ribs so that not only do they fit over the torsion tube or shaft but also, by having a small flange formed on them in the stamping process, there is a convenient land on which to weld or rivet the blade skin sheeting.

An embodiment of this invention is shown in the drawings in which

Fig. 1 is a perspective view of a blade;

Fig. 2 shows the torsion member and ribs of the blade of Fig. 1;

Fig. 2a is a section on x-x of fig 2;

Fig. 2b is a cross section through a blade with an alternative torsion member.

Fig. 3a is a cross section through a leading edge portion of a blade.

Fig. 3b is an alternative to Fig. 3a;

Fig. 3c is a cross section through a trailing edge portion of a blade.

Fig. 4a is a partial front elevation of a windmill rotor;

Fig. 4b is a plan view onto the rotor.

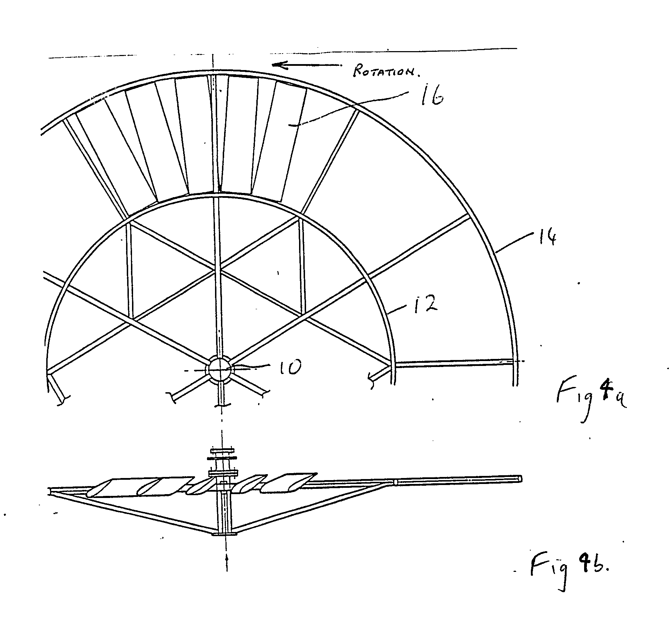

As shown by Fig. 4 the rotor has a central axis 10, extending from which is a supporting structure including inner and outer rings 12, 14. Extending between these are multiple blades 16. The blades are pivotally mounted to the rings. Pivotal motion of a blade alters the area presented to the wind.

As shown by Figs. 1 and 2 a blade 16 has a torsion member 20 which is a hollow tube extending along the pivot axis of the blade. The torsion member 20 carries a plurality of ribs 22. Each has a web 24 perpendicular to the blade axis and flanges 26. The resulting structure is covered with a skin of sheet metal 28.

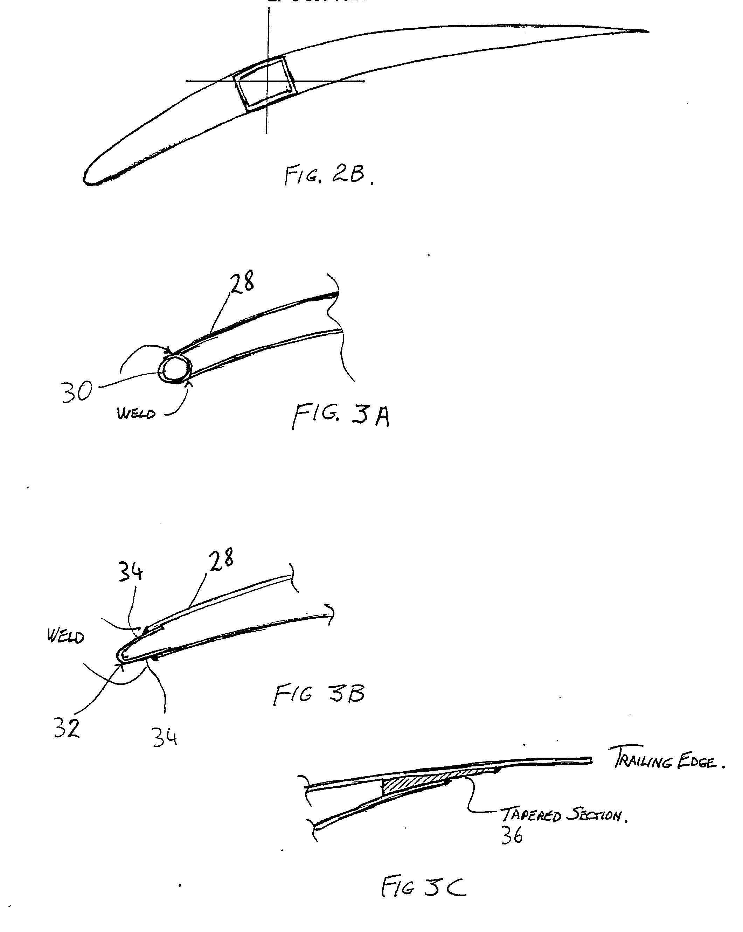

At the leading edge or front of each blade a variety of construction is possible. For instance one may use a fairly small diameter tube 30 and weld or rivet the edges of sheet 28 to it as shown in **Fig 3A**. Alternatively a shaped section 32 may be used, **Fig 3B**, and the sheeting 28 welded or rivetted. Because of the alteration in pitch along the length of the blade it will be appreciated that truly rectangular sheets will not fit in an exact manner, and therefore the second alternative above, **Fig 3B**, may be preferable as the length of each fold 34 will give some accommodation to the fitting up of a rectangular sheet.

The trailing edge of the blade may not need a separate section on which to fix the sheets together and it may suffice to let one sheet project a few inches past the other, and run a weld or line of rivets down the seam. Alternatively, a thin tapered section strip 36 may be inserted between front and back sheets before welding or rivetting. **Fig 3C**.

The sheets are of course rivetted, screwed or spot welded to the main ribs 22, **Fig 2**, to secure a strong unified structure.

One of the advantages envisaged for the design apart from great stiffness with lightness, is that any feathering device could be made to engage with a stub shaft at one end of the blade, preferably the end nearest to the windmill rotor shaft centreline and any torque whether positive or damping, applied to the said shaft would readily transmit to the blade in general. It is envisaged that the stub shafts at the blade ends would be carried on suitable flanges secured to the blade end closure plates and would either be of non-corrosive or rustless metal or more probably would be cast iron and provided with bronze oil impregnated bushes. These bushes could be of the shouldered type to give axial location.

Given that the ribs secured to the shaft or torsion member of each blade are of correct shape, no difficulty should be experienced in fixing down plain flat sheeting into position.

## Claims

1. A windmill blade comprising a torsion member extending along the blade, a plurality of ribs fast with the torsion member and extending from the torsion member at points spaced along its length, and an outer skin over the torsion member and ribs.

2. A blade according to claim 1 wherein the ribs each lie in a respective plane which is substantially perpendicular to the torsion member.

3. A blade according to claim 2 wherein the outline of each rib substantially corresponds to the blade cross section.

4. A blade according to any one of the preceding claims wherein the torsion member is tubular.

5. A windmill having a rotor with a plurality of blades according to any one of the preceding claims pivotally attached thereto.

6. A windmill according to claim 5 wherein the rotor comprises a pair of concentric rings one within the other, and the blades extend generally radially between the rings.

ROTATION

28

TRAILING
EDGE

LEADING
EDGE

16

PIVOT

BLADE SHOWN WITH PARALLEL
EDGES, BUT MAY INSTEAD BE
OF TRAPEZIUM SHAPE.

FIG 1

20

22

WELDED

AXIAL LENGTH GREATLY FORESHORTENED

X

22

X

FIG 2.

SECTION AT X-X

FIG 2A.

24

26

26

EP 0 391 702 A1

FIG. 2B.

28

30

WELD

FIG. 3A

34    28

WELD

32    34

FIG 3B

TRAILING EDGE.

TAPERED SECTION.
36

FIG 3C

ROTATION.

16

14

12

10

Fig 4a

Fig 4b.

Fig 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 216 378 (HAW & CO.) * Page 2, left-hand column, line 12 - right-hand column, line 33 * | 1 | F 03 D 1/06 |
| A |  | 2,3,4 |  |
| A | FR-A-1 149 452 (NEYRPIC) * Page 1, right-hand column, lines 20-35 * | 1,2,3,4 ,5 |  |
| A | GB-A-2 178 799 (KLING) * Abstract; figure 1 * | 6 |  |

TECHNICAL FIELDS SEARCHED (Int. Cl.5)

F 03 D

The present search report has been drawn up for all claims

| Place of search | Date of completion of the search | Examiner |
|---|---|---|
| THE HAGUE | 29-06-1990 | DE WINTER P.E.F. |